# EUROPEAN PATENT APPLICATION

(11) **EP 1 006 679 A1**
(43) Date of publication of application: **07.06.2000**
(21) Application number: 98310352.4
(22) Date of filing: 16.12.1998
(51) Int. Cl.: H04B 7/185

(54) **Method of interference mitigation in satellite communication using Doppler shifts**

(30) Priority: 04.12.1998 EP
(71) Applicant: ICO Services Ltd., London W6 9BN (GB)
(72) Inventor: Riley, Michael John, Bracknell, Berks RG42 4EZ (GB)
(74) Representative: Musker, David Charles

(57) **Abstract**

A method of mitigating interference in the uplink of a satellite communications system, the method comprising the steps of: repeatedly spectrally analysing the uplink signal to provide an uplink spectrum sequence over time; locating within said spectrum sequence at least one set of spectral components which share a common rate of change of Doppler shift over time; and processing said downlink signal to reduce the effects of said set of components therein.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some times of terminal (such as handsets) is very limited, and the gain of the antennas may be very low. As the satellite has somewhat higher power, the signal strength on the user downlink is somewhat larger. In the feeder link between the Earth station and the satellite, more power and higher gain antennas are available. Accordingly, the user terminal uplink is, in many cases, the link on which the signal is most susceptible to noise.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferers may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

Our co-pending European application 9830........, filed on 4 December 1998, agent's reference J40185EP, describes a method of utilising spatial filtering, where two or more satellites are available, with visibility of the user terminal and interference sources close to it.

Satellite systems such as that to be operated by the present applicant provide for global visibility of at least two satellites at any point on the Earth at any time of the day. However, other satellite constellations (for example, the "Iridium"™ constellation of Motorola or the Globalstar constellation) can only guarantee single coverage, and there will therefore be times and places when that method cannot be used. Additionally, even where multiple coverage is provided, reception may be blocked by buildings or natural obstacles, reducing the number of available satellites to one at times

It is accordingly an object of the present invention to provide interference mitigation techniques usable from a single satellite (although the invention may be used in conjunction with multiple satellites where available) particularly in the user terminal uplink direction.

In one aspect, the present invention provides separation of multiple signals (e.g. a wanted user terminal signal from another, or an interference signal) using the change in Doppler shift over time.

It was known in satellite navigation to use change in Doppler shift to determine position; the TRANSIT-2 US Naval satellites allowed a terrestrial ship to determine it's position using a signal received from the satellite in this way, although these satellites have long been superseded by the GPS and GLONASS systems which do not employ this principle. However, it is believed that Doppler shift change has not previously been used for communications interference mitigation.

In another aspect, the present invention provides a method of using the signal from the same satellite at two different times (corresponding to different orbital positions) to provide a spatial filter to reduce the level of one or more interferors.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 is a diagram illustrating schematically the geometry of some interference sources;
Figure 7 is a diagram showing schematically the spectral distribution of frequency carriers on a user downlink beam;
Figure 8 is a diagram showing schematically the structure of a TDMA frame on one of the carriers of Figure 6;
Figure 9 illustrates a subsatellite ground track on Earth, with particular reference to three points;
Figure 10 is a diagram showing the variation of frequency against time due to the Doppler shift of the satellite relative to the three points of Figure 9;
Figure 11 is a block diagram showing the structure of interference mitigation apparatus according to a first embodiment;
Figure 12 is a three dimensional diagram showing the variation of signal spectrum over time due to the Doppler shift caused by movement of a satellite;
Figure 13 is a flow diagram showing schematically the operation of the first embodiment;
Figures 14a and 14b are diagrams showing signal spectra at two times, corresponding to sections of the plot of Figure 12;
Figure 15 corresponds to Figure 6, and is a diagram illustrating schematically the geometry of some interference sources in relation to satellite positions at first and second times; and
Figure 16 is a block diagram showing the structure of interference mitigation apparatus according to the second embodiment.

### FIRST EMBODIMENT

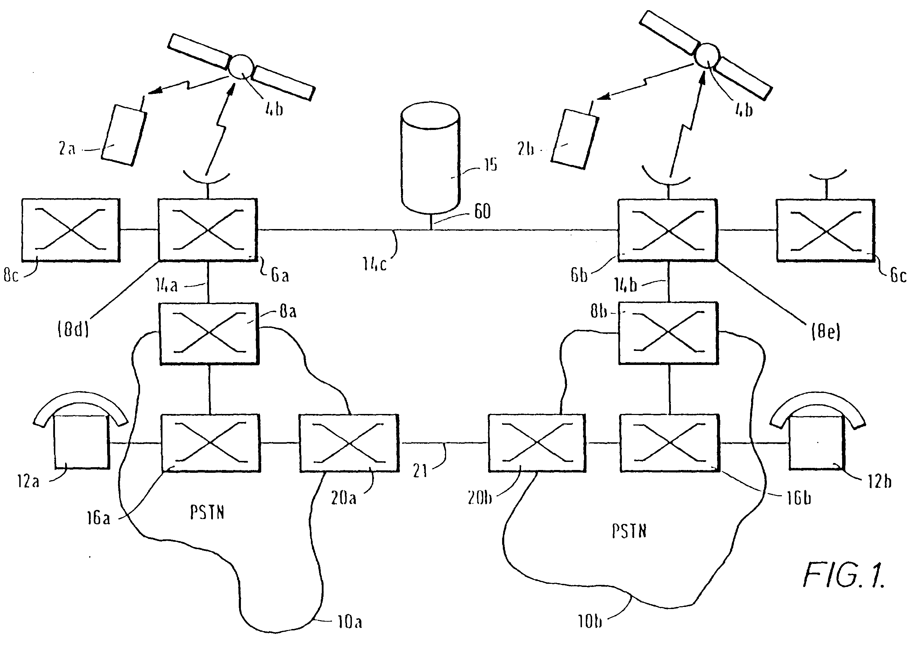

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

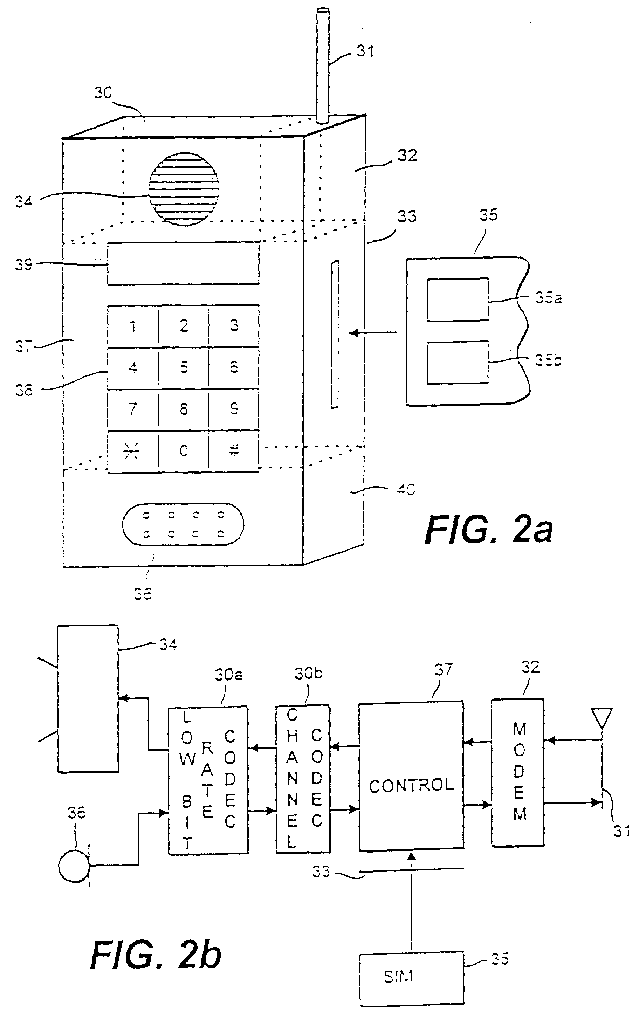

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

### Earth Station Node 6

The Earth station nodes 6 are arranged for communication with the satellites.

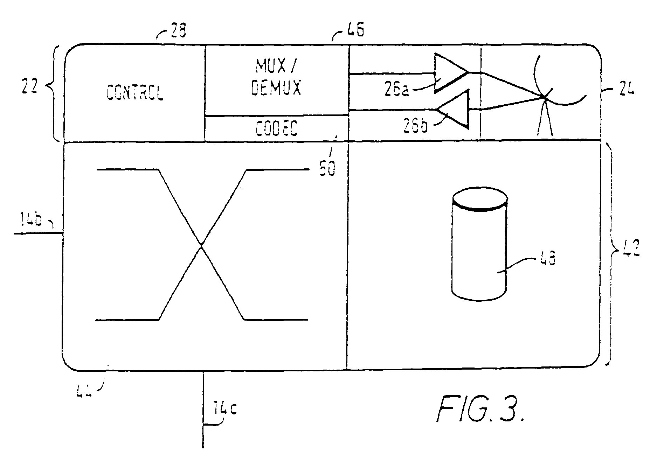

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control data may be transmitted from a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and transmit these to the database station 15, which calculates the rough terrestrial position of the mobile terminal apparatus 2 using the differential arrival times and/or Doppler shifts in the received signal, and knowledge of which beams of which satellites 4 the signal was received through. The position is then stored in the database 48.

### Satellites 4

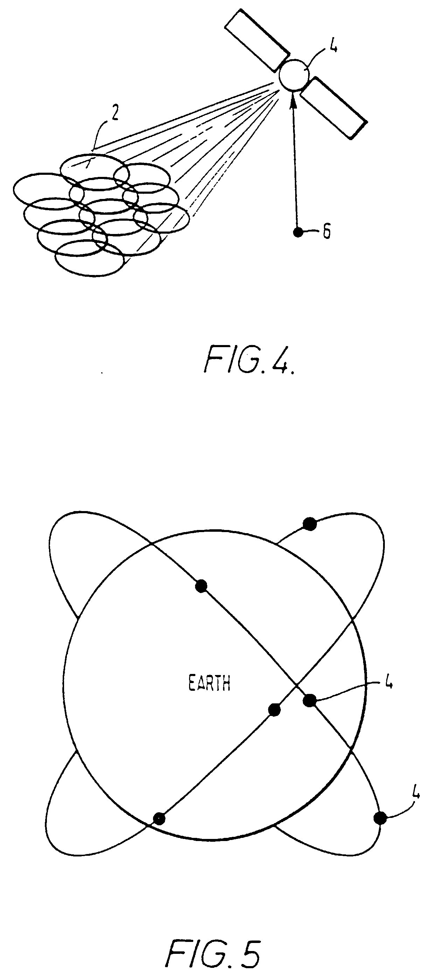

The satellites 4a, 4b comprise generally conventional communications satellites such as the HS601 available from Hughes Aerospace Corp, California, US with a communications payload, which may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

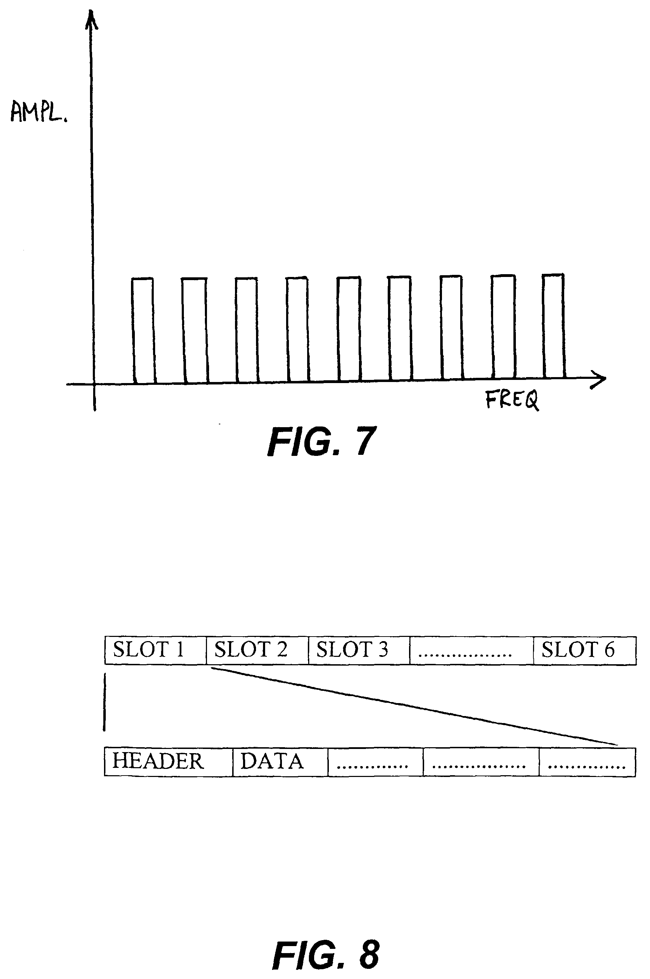

On each beam, the satellite therefore transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 61, 121 or 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, referring to Figure 8, each uplink and downlink frequency carries a plurality (e.g. 6) of time division channels, so that each mobile terminal 2 communicates on a channel comprising a given time slot in a given uplink and downlink frequency. The time slots are separated by a short guard interval.

Within each beam there is also provided a downlink common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 can calculate position data of a transmitting source from its signal propagation delay and its Doppler shift in the uplink signal.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

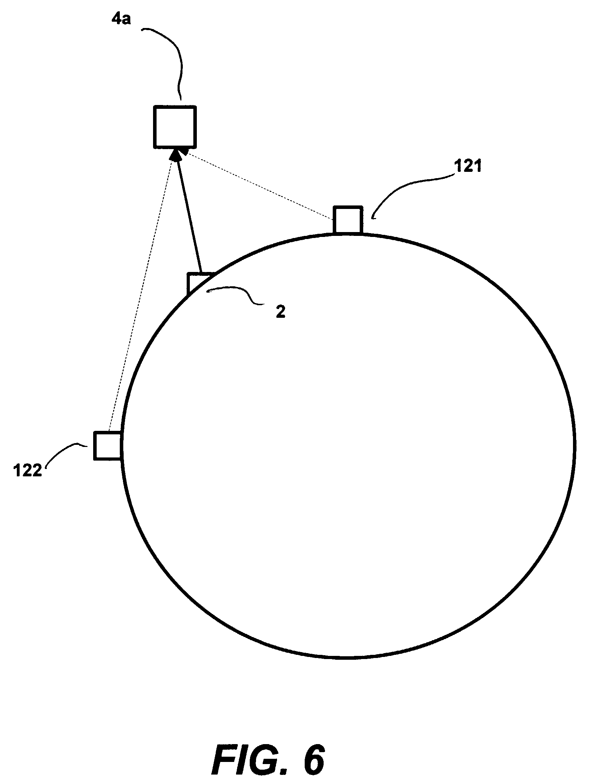

Referring to Figure 6, the effects of two interferers 122, 121 are shown on a system comprising a mobile terminal 2 and a satellite 4. The interferers may be, for example, television broadcasting stations, terrestrial mobile communications base stations; terrestrial fixed link microwave repeaters; or terrestrial mobile communications terminal equipment. In general, a priori knowledge of the position of at least some of the interferers 121, 122 is not available.

Each of the satellites 4 is moving overhead with a substantial velocity over the ground. The effect of this is that, at any instant, the signals from the user terminal 2 and the interferers 121, 122 will be exhibiting an amount of Doppler shift which depends upon their distance in front of, or behind, the sub-satellite point on Earth, and upon their lateral distance from the sub-satellite track of the satellite across the Earth.

Additionally, the signal from each interferer will be delayed by an amount which depends upon the slant path from the transmitter to the satellite, which in turn is a function of the satellite altitude (which is fixed), the radius of the Earth and the distance of the transmitter from the sub-satellite point.

Unless the interference source 121 or 122 is exactly located at the same position as the user terminal 2, both the delay and Doppler shift of the component signals from the two will be different.

Thus, the signal which is supplied on the feeder downlink from the satellite 4 to the Earth station 6 is made up of a component signal from the user terminal 2, a component signal from the interferer 121, a component signal from the interferer 122, component signals from other user terminals or interferers, and background noise.

### Doppler shift change

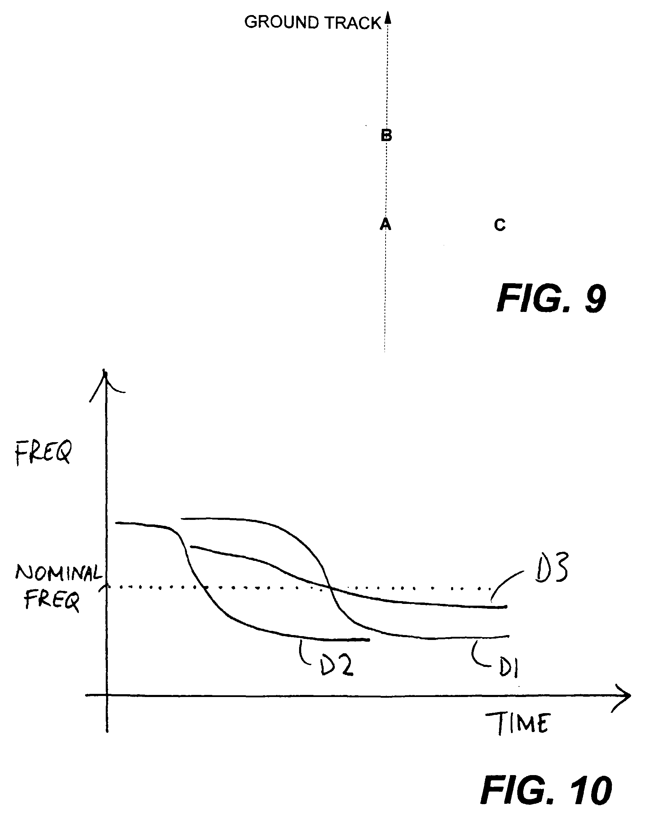

Referring to Figures 9 and 10, the profiles of the Doppler shift experienced by signals transmitted by three points A, B, C on the ground as a satellite 4a passes over are shown.

A first trace D1, corresponds to a point A on the track of the satellite. In this case, as the satellite approaches, and then passes overhead, there is a relatively steep change in Doppler shift.

For a point B, located on the ground on the satellite ground track but displaced along the ground track forward of the point A, the same Doppler shift behaviour over time is shown in trace D2, but displaced in time.

For a point C located spaced of the satellite ground track from the point A, a Doppler shift pattern D3 aligned in time with that of the point A but having a less steep transition is measured.

It will be seen that the progressive change in Doppler shift over time of a terrestrial transmitter (such as a user terminal or interferor), characterises both the distance along the ground track, relative to the sub satellite point, and the displacement from the ground track thereof.

Thus, by measuring the Doppler shift behaviour over time of a received signal component, the position of that signal component can be determined, except that there is an ambiguity as to whether the point lies on the left or the right of the ground track, which is resolved by the identity of the beam in which the signal was received.

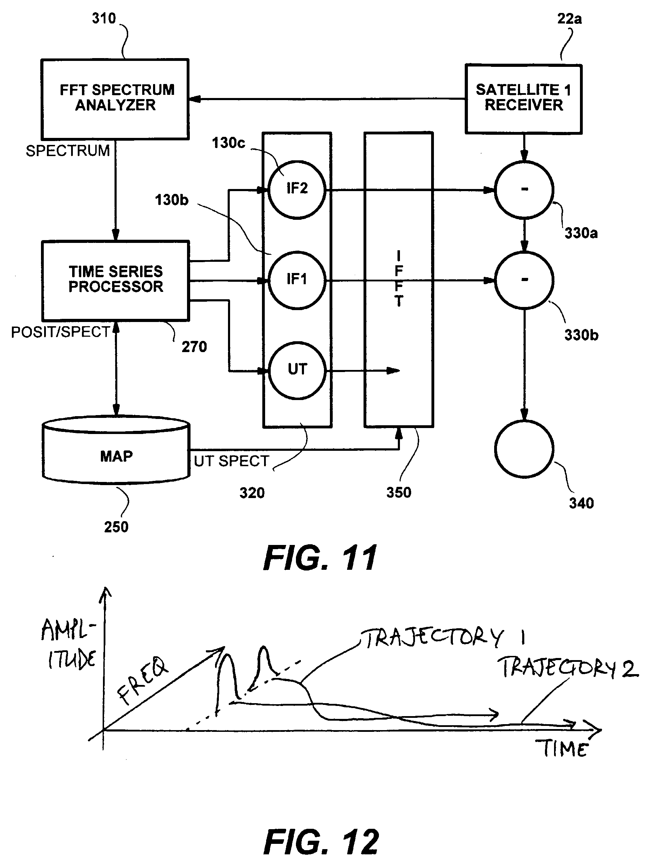

Referring to Figure 12, the spectrum at any instant (only one component of the spectrum is illustrated) comprises a section through the spectrum over time. Two signals, such as a signal from the user terminal 2 and a signal from an interferer 121, will each have some constant spectral characteristics. At any moment in time, the signal spectra will be displaced along the frequency axis by an amount which corresponds to the Doppler shift between the transmitting source (user terminal or interferer) and the satellite 4; and between the satellite 4 and the Earth station node 6. The positions of the satellite 4 and earth station node 6 are known to a high degree of accuracy.

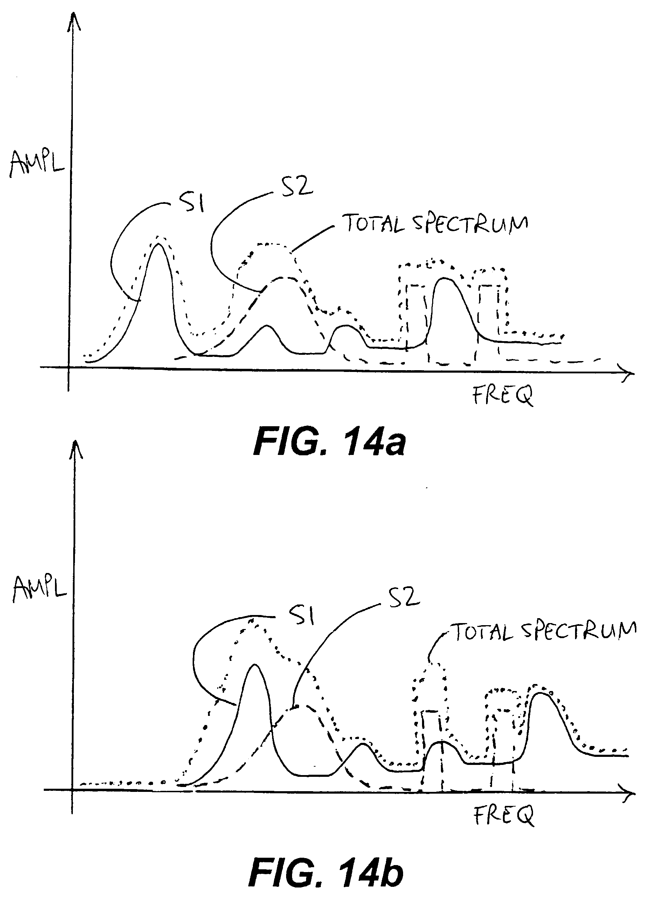

Figure 14a shows a spectrum at a first time T1, and Figure 14b shows a spectrum at a second time T2. It is apparent that the two component spectra S1 and S2 (for example, corresponding to a user terminal air interface spectrum and an interference spectrum) contained within the satellite beam downlink signal have shifted by different Doppler shifts, and that the trajectory of these different Doppler shifts may be detected to separate the signal spectra using image analysis and processing techniques.

Referring to Figure 11, signal processing apparatus for utilising this possibility for separation of the signals will now be described.

At the Earth station node 6, at least one satellite tracking antenna 24 tracks one of the satellites 4a, 4b and the demultiplexed signal from the satellite receiver 22a corresponding to one frequency carrier produced by each of demultiplexers 46a, 46b from the corresponding signal from the satellites 4a, 4b is supplied to a spectrum analyser 310.

The spectrum analyser is arranged to repeatedly sample the user downlink signal and to form a high resolution spectrum at each sampling instant. The spectrum contains both real and imaginary components (i.e. both phase and amplitude information) and is obtained, for example by a transform such as a Fourier transform.

The spectra are supplied to a processor 270 comprising a DSP or microprocessor device, and associated memory.

An interference map database store 250 is provided, storing position data defining the position of several interference sources, and spectrum data defining the averaged long term, or air interface, component signal spectra of each. Also stored therein is an air interface spectrum for a user terminal.

The successive spectra from the analyser 310 are stored by the processor 270, to build a series of spectra over time for a period of, for example, 5 minutes (which is of the order of the time taken for a beam to pass over a location on the earth in the above quoted orbits). The processor 270 is arranged to detect all signal components which are exhibiting the same Doppler shift over time, by analysing the series of spectra. Spectral components which are moving in the same trajectory (i.e. whose Doppler shift change trace over time is the same) are detected and associated together.

The processor 270 is arranged to compare each such associated set of components supplied by the spectrum analyser 310 at each sampling instant with the air interface spectra of the user terminal 2, and known interference sources stored in the database 250.

Characteristic spectral features such as the presence of two or more peaks separated by predetermined frequency intervals may be used for comparison.

If a set does not correspond to these, it is treated as a new interference source, and a new entry in the database 250 is made.

As illustrated in Figures 12 and 14, spectral lines belonging to the same component signal (i.e. from the same transmitter on the ground) will move parallel to one another over time. These parallel "ridges" in the time series of spectra are detected by the processor 270 using pattern recognition techniques such as neural networks, fuzzy-logic and expert systems, well known in the fields of machine vision and visual recognition.

Thus, the processor 270 is arranged to output a plurality of component signals, each of which consists of a set of spectral amplitude coefficients which move with the same Doppler shift over time.

By fitting a polynomial through the detected Doppler shift traces and determining the parameters of the polynomial, the position of each of the generators of the detected component signals (i.e. the user terminal 2 and each interferer 121, 122), in terms of their position along the satellite ground track and away from the satellite ground track, are detected and converted to a position on the Earth, which is stored in the database 250.

This data effectively forms a map of the transmission sources, since the Doppler trajectories can, with knowledge of the satellite orbits (which is always available to a high degree of accuracy) and the geometry of the Earth surface (which is similarly available) be converted into positional coordinates. The positions and spectra of any interference signals (i.e. sets of spectral components not corresponding to the user terminal air interface spectrum or any interferor spectrum and position already stored) are stored in the database 250.

Each of the separated long-term spectra is compared with the stored air interface of the user terminal. Any component signals which are recognised as corresponding to a user terminal spectrum are not further processed at this stage.

A predictor 320 receives the past values of the separated component signal spectra over time, and uses these to predict, for each of the interference signals, a present spectrum, each of which it is then passed through an inverse transform stage 350 arranged to inverse-transform it into a time domain signal approximating the interference signal.

Each such time domain approximated interference signal is then subtracted from the signal from the satellite receiver 22a, so as substantially to reduce the amplitude of the interference signal therein, at a respective subtractor 330a, 330b. The interference-compensated signal appears at an output port 340.

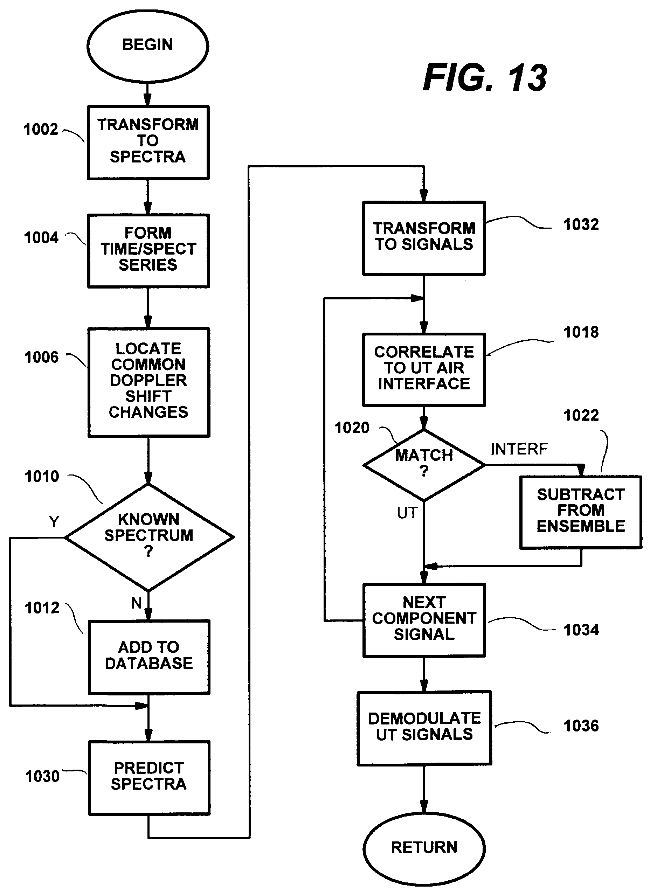

Referring to Figure 13, the method of operation of this embodiment will now be described in greater detail.

As discussed above, in a step 1002, the satellite downlink spectrum for each beam in turn is transformed into the frequency domain using the Fast Fourier transform (or some other frequency related transform). In a step 1004, the processor 270 forms the time series of spectra and stores these. The spectra include both real and imaginary components (i.e. both phase and amplitude).

In a step 1006, the processor 270 processes the time series to identify signal spectra that have common trends in rate of change of Doppler shift, and derives the position of the corresponding signal transmission source on Earth, resolving the ambiguity as to which side of the ground track signal lies by reference to the beam in which it was received, or other means.

In a step 1010, the spectrum is compared with the air interface spectrum and with all currently stored interference spectra in the interference map generator 250. If the spectrum and its position do not match those of an entry already held in the database 250, a new entry is made therein recording the position and spectrum detected, in a step 1012.

In a step 1030, the processor 270 uses the long-term spectra, the calculated positions and the actual Doppler shift which would have been detected from those positions, to calculate separate times sequence of spectra for each of the component signal spectra. This now contains more spectral detail than the long-term average spectra, in the form of variations in amplitude of the spectral coefficients.

From these, the predictor 320, predicts, for each component signal spectrum, a current spectrum.

Next, in step 1032, each such spectrum is inverse-transformed to a time sequence which approximates the component signal concerned. In step 1018, each of these is correlated with the air interface spectrum of the user terminal 2 stored within the database 250.

For those which exhibit a significant correlation peak (step 1020), no further action is taken. For the remainder, which are assumed to correspond to interference signals, each is subtracted (step 1022) from the satellite downlink signal until all interferers have thus been subtracted (step 1034). The signal thus processed, appearing at port 340, is then demodulated (step 1036) if possible.

Naturally, the above processes may be performed in a different order. For example, with suitable modification of the apparatus of Figure 11, the comparison with the user terminal air interface of steps 1018, 1020 could be performed in the frequency domain on each of the separated average spectra. Likewise, the predicted spectra could be combined to give a single spectrum of all interference signals (without the component signal spectra corresponding to the user terminal air interface) which could then be inverse transformed and subtracted from the satellite downlink signal in a single operation, rather than treating each interferer separately.

The predicted user terminal spectrum signal could, if desired, be used further to assist in the demodulation of step 1036.

### SECOND EMBODIMENT

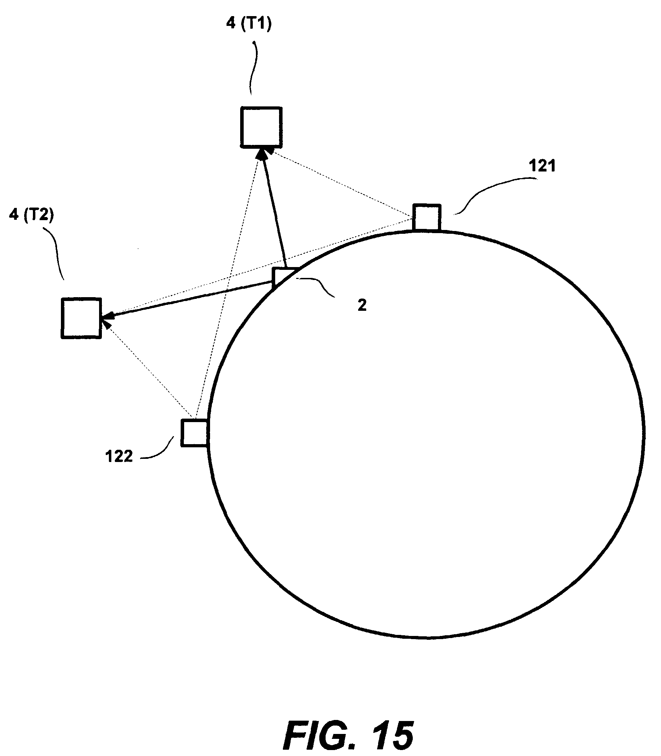

In this embodiment, referring to Figure 15, the signals received from the satellite at two different times in orbit (labelled T1 and T2) are used as inputs to a spatial filter, to provide signal separation. Spatial filtering is, as described in our above-referenced co-pending application, performed by receiving signals from two or more separate points in space and using the spatial separation of the receivers to separate the signals transmitted from spatially separated transmitters.

However, since in a satellite communications system the position of the satellite at any given time is known to a high degree of accuracy, a technique akin to spatial filtering can be employed to separate the desired user terminal signal from interferers.

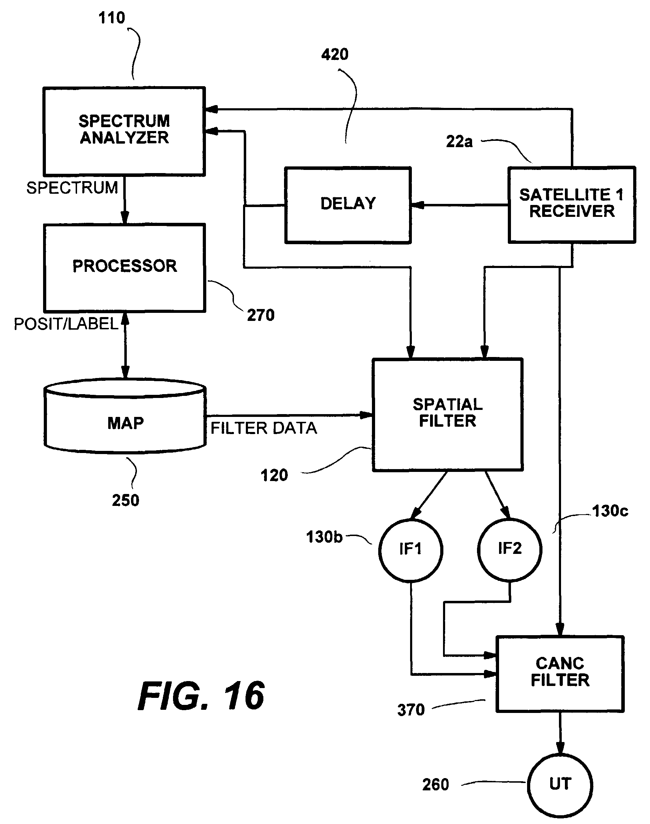

Referring to Figure 16, the signal from the satellite receiver 22a is supplied to a delay line 420 with a delay length of, for example, a few minutes (for the orbital altitudes described herein). The received satellite signal and the delayed satellite signal are supplied to an analyser 110. The analyser is, for example, arranged to generate the frequency spectrum of the received signal as in the above described embodiment, and/or the correlation between the received signal and the signal from the delay 420.

The output of the analyser 110 is supplied to the processor 270 which, in this embodiment, as in the preceding embodiment, is arranged to access the map database 250, and to determine separate signal components based on the Doppler trajectory technique described in the preceding embodiment, and/or the change in the relative delays of the signals from the different signal sources as indicated by the cross correlation spectrum between the received signal and the delayed signal.

Where the identity of one or more interference generators 121, 122 is known, equivalent data can be stored within the interference map database 250. For example, where the position of a powerful radio transmitter such as a radar site, a radio astronomy site, or a television repeater is known, then the interference map database 250 can store data defining the position thereof, and data characterising the air interface thereof, in the form of a stored signal sequence covering at least one cycle or sweep of the signal in question (or an averaged version taken over several cycles thereof).

The apparatus of Figure 16 can be used to identify components signals as corresponding to interference sources, by determining whether there is a correlation between the user terminal air interface and any of the separated component signals.

Where such a correlation is found, a label identifying the separated component signal as being interference, and specifying the type of interference (i.e. by reference to the stored signal to which it correlated) is generated.

Preferably, the position information stored in the interference map database 250 is also used to determine whether the delay time derived by the cross correlator 110 for that component signal is compatible with the stored position for the interference generator with which the component signal correlates.

In the event that the component signal corresponds to a stored interference signal, but not to the corresponding stored positional data, as would occur for example if an interference source had moved, a new entry is recorded in the interference map database 250.

For separated signal components which do not correlate with any user terminal or interferer stored in the interference map database 250, a spectral analysis is performed over time and, if a consistent spectrum is detected, a representation of the component signal is stored in the interference map database 250, together with positional data specifying its position on Earth, derived insofar as is possible from the orbital position and motion of the satellites 4a 4b and the delay signal calculated by the cross correlator 110.

Thus, the interference map database 250 maintains a collection of records for interference sources, with information indicative of the position of, and the signal generated by, each source.

Accordingly, the processor 270 is arranged to update the interference map database 250 to maintain a list of interference sources, together with their terrestrial positions.

This position data is used to generate coefficients for a spatial filter 120 as described in our above-referenced co-pending application, but using the satellite signals at two different times instead of two or more satellites at different positions.

The outputs of the spatial filter 120 are a plurality of interference component signals at ports 130b, 130c, which correspond to approximations to the interferers generated from each signal source. The approximations comprise predictions which use spectral data stored in the database 250 where available. These are then employed to calculate a cancellation filter 370, corresponding to the spectral inverse of the interference signals.

The cancellation filter 370 uses the interference component signals to minimise the levels of those interference signals in the output of the filter. It is therefore analogous to the operation of an echo canceller in minimising the level of echos in its output signal.

For example, the cancellation filter 370 may continuously generate the coefficients of a pair of inverse filters, each having a response the inverse of that of the spectrum of one of the interference component signals at the ports 130b, 130c, using for example either an adaptive error minimisation technique or an LPC (linear predictive coding) coefficient calculation technique.

Alternatively, the estimated interference components signals may be used together with the air interface estimate for the user terminal to calculate an optimum separation filter.

The output of the satellite receiver 22a is filtered by the cancellation filter 370 to provide an output signal at a port 260 from which detected interference sources have been eliminated.

The position data, and associated label data made available at the ports 230 identifying the source as either a user terminal or interference, is stored within the interference map database 250 unless it corresponds to data already stored there from previous interference measurements.

In this embodiment, to further reduce the level of interference, the other separated component signals are subtracted at a subtractor 260 from the user terminal component signal at the port 130a.

### OTHER EMBODIMENTS

It will be clear from the foregoing that the above described embodiment is merely one way of putting the invention into effect. Many other alternatives will be apparent to the skilled person and are within the scope of the present invention.

For example, the features of the above-described two embodiments may be combined with each other, or with the embodiments of our above-referenced co-pending application of 4 December 1998 (the contents of which are incorporated herein by reference).

In particular, the output of the first embodiment may further be enhanced by filtering as in the second, and that of the second by subtraction of interferors as in the first.

One or more interferors may be user terminal signals themselves, in which case each is processed to mitigate interference by the other.

The database 250 may be derived from other sources, such as a spare satellite (as described in our earlier European EP 0858176, applicant's reference IDEA 56, incorporated herein by reference).

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. Use of change in Doppler shift over time to separate multiple signals from terrestrial sources received by a satellite communications system.

2. A method of mitigating interference in the uplink of a satellite communications system, the method comprising the steps of:
repeatedly spectrally analysing the uplink signal to provide an uplink spectrum sequence over time;
locating within said spectrum sequence at least one set of spectral components which share a common rate of change of Doppler shift over time; and
processing said downlink signal to reduce the effects of said set of components therein.

3. A method according to claim 2, wherein the step of processing comprises predicting a value of said set.

4. A method according to claim 2 or claim 3, wherein the step of processing comprises filtering to reduce the value of said set.

5. A method according to claim 4, wherein the step of filtering comprises constructing a filter corresponding to the spectral inverse of the or each said set.

6. A method according to any of claims 2 to 5, wherein the step of processing comprises inverse transforming the or each said set to provide a time-domain signal, and subtracting said time-domain interference signal.

7. A method according to claim 2, wherein the step of processing comprises deriving position data relating to the terrestrial position of the transmitter of said set, and performing spatial filtering using said position data.

8. A method of mitigating interference in the uplink of a satellite communications system, the method comprising the steps of:
delaying said uplink signal, so as to provide at least first and second versions thereof separated in time by a delay;
separating at least one different component signal thereof;
deriving position data relating to the terrestrial position of the transmitter of said component signal;
combining said first and second versions utilising said position data to provide at least one spatially separated interference signal; and
processing said downlink signal to reduce the effects of said set of components therein.

9. A method according to claim 8, wherein said step of deriving position data comprises locating within the downlink spectrum at least one set of spectral components which share a common rate of change of Doppler shift over time.

10. A method of separating first and second signals emanating from different points on Earth, and received in the uplink of a satellite in non-geostationary orbit, comprising the steps of measuring, over a period of time, the frequency changes of components of said uplink signal, associating components having common frequency changes to form component signals, and separating said associated component signals.

11. A method according to claim 10, comprising the steps of detecting, in said uplink signal, components of a stored representation of said first signal; and using said stored representation to reduce the effects of said second signal on said first.

12. Interference mitigation means for performing the method of any preceding claim.

13. A satellite communications system comprising at least one satellite (4) in orbit about the Earth, and being for receiving a user uplink signal from a user terminal (2) adjacent the Earth, in the presence of co-channel interference from at least one interference source (121) adjacent the Earth, further comprising means for interference mitigation by performing the method of any of claims 1 to 11.
